# EUROPEAN PATENT SPECIFICATION

(11) **EP 1 989 891 B1**
(45) Date of publication and mention of the grant of the patent: **28.04.2010**
(21) Application number: 06707094.6
(22) Date of filing: 20.02.2006
(51) Int. Cl.: H04W 4/16

(54) **SERVICE CONTROL ENTITY**
DIENSTSTEUEREINHEIT
ENTITE DE CONTROLE DE SERVICE

(43) Date of publication of application: 12.11.2008
(73) Proprietor: Telefonaktiebolaget LM Ericsson (publ), 164 83 Stockholm (SE)
(72) Inventor: MARINIELLO, Francesco, I-84083 Castel san Giorgio (IT)
(74) Representative: Pfeifer, Torsten
(86) International application number: PCT/EP2006/001514
(87) International publication number: WO 2007/095963

(56) References cited:
- US-A1- 2002 137 497
- US-A1- 2003 104 812
- HLAVACEK D M ET AL: "ALTERNATIVE METHODS FOR INTRODUCING NEW WIRELESS INTELLIGENT NETWORK SERVICES USING TRIGGERS AND QUERIES" BELL LABS TECHNICAL JOURNAL, WILEY, CA, US, vol. 2, no. 3, 21 June 1997 (1997-06-21), pages 20-29, XP000703738 ISSN: 1089-7089

## Description

### [Field of the invention]

The present invention relates to a service control entity for a telephone network, and to a method of controlling such a service control entity.

### [Background of the invention]

In the field of telephony the concept of presenting a text information that indicates the name of a calling party to a called party is known. For example, such a service is referred to as Calling Name Presentation (CNAP). In connection with wireless networks this service is also sometimes referred to as Wireless Calling Name (WCNAM).

A calling name presentation service is a network-based delivery of text information representing the calling party's name to the called party. This information can then be displayed to the called party, which enhances the call management functionality. Namely, the called party is no longer forced to identify the caller on the basis of the calling number (i.e. the telephone number of the calling party), such that it is e.g. not necessary to program the called party's telephone in order to associate calling numbers with particular names. The CNAP service is specified in 3GPP TS 22.096 and 23.096.

Another example can be found in US 2003/104812.

It is noted that the presentation of the calling party name is a network-based service, i.e. it is not initiated or controlled by the calling party's telephone. However, the delivery of the calling name to the called party may be affected by other services subscribed to by the calling party. For example, if the calling party has subscribed to a Calling Line identification Restriction (CLTR) service, then the calling line identity (calling number) as well as the calling name should not be presented to the called party.

In a mobile communication network arranged in accordance with GSM or 3GPP, the CNAP service is handled such that for mobile originated calls the originating Mobile Switching Center (MSC) may include calling name information at call set-up, and for mobile terminated calls the calling name identity is provided by the terminating Visited MSC (MSC) to the Mobile Station (MS). The Home Location Register (HLR) stores the logical state of the name presentation service on a per subscriber basis. It may also store a subscription option called "override category" on a per subscriber basis. If the name presentation service is indicated as "provisioned", then when the subscriber registers on a visitor location register (VLR), the HLR sends to the VLR subscriber information about the CRAP service. The VLR stores the service state information and override category received from the HLR.

As mechanisms for obtaining and exchanging name presentation data, two methods or mechanisms are known in accordance with the ANSI standards for CNAP, namely using the Wireless Intelligent Network (WIN) triggers known as the Service Request (ServReq), according to IS-764, and the Facility Selected and Available (FAVAIL), according to IS-771.

The first method, originally available with IS-764, establishes the Home HLR as the controlling network element. Upon receiving an incoming call, the MSC launches a Location Request query to the HLR, which triggers the ServReq once the HLR, scans the data record to discover that the customer being called subscribes to CNAP. The HLR launches the ServReq request to a Service Control Point (SCP) acting as a CNAP data base containing the CNAP name data corresponding to the calling party number. Before the message is received by the SCP, the message must first be processed by a functional element whose role is to provide protocol conversion between the invoked protocol, ServReq, and the protocol for WCNAM, namely GR-1188, which is the data format in which the data is stored and in which the SCP expects queries. Once the SCP obtains the message in GR-1188, it processes the request and provides a response in GR-1188 format containing the WCNAM information, which is converted back to a ServReq CNAP format and delivered to the HLR. The HLR in turn delivers the CNAP data known as "display text" information to the serving VLR. This allows the VLR to provide the display text information necessary to send the information over the control channel to the called party.

If the IS-771 FAVAIL query is used, the serving MSC is the controlling network element. In this method a trigger profile is stored in the HLR, instructing the serving MSC/VLR to send the FAVAIL query to the proper SS7 alias point code for processing. The major difference to the previous method is the use of a trigger profile (shared in the HLR to VLR communications upon registration in the served area) and that the query (from the serving MSC to the SCP) for the CNAP data occurs after the call has already been set-up (from the home MSC to the serving MSC).

Regarding the protocol conversion (from ServReq/FAVAIL to GR-1188) many manufacturers of network equipment simply decided to support the GR-1188 protocol directly, since GSM systems did not support the ANSI WIN standards.

### [Object of the invention]

The object of the present invention is to provide an improved, simplified and more flexible mechanism for a calling name presentation service in a telephone network, e.g. in a mobile telephone network.

### [Summary of the invention]

The above object is solved by a service control entity for a telephone network having the features of claim 1, and by a method of controlling such a service control entity having the features of claim 16. Advantageous embodiments are described in the dependent claims.

In accordance with an embodiment of the present invention a service control entity is provided for a telephone network, where the telephone network comprises a call switching system on the one hand, for performing call switching control, and on the other hand comprises a service implementation system that is arranged in accordance with an intelligent network scheme, said scheme being designed for providing a plurality of different services to calls switched in the call switching part by using a common set of rules for service invocation and execution. In other words, an architecture is provided such that a dedicated service implementation system is provided apart from the call switching system. Namely, the term intelligent network refers to an architecture that separates service logic from switching equipment. In accordance with the invention, the service control entity is a part of the service implementation system and comprises a logic that is arranged to send one or more types of calling name instruction messages provided in accordance with the rules of the intelligent network scheme to the call switching system. Each type of calling name instruction message comprises an instruction relating to the inclusion of calling name presentation information in a call being switched by the call switching system.

In other words, in accordance with a concept of the present invention, a calling name control service is implemented in a dedicated service provision architecture that is designed for providing a plurality of different services by using a common set of rules and conventions. Such an intelligent network scheme can e.g. be the Customized Applications for Mobile Network Enhanced Logic (CAMEL), or can be based on the Intelligent Network Application Part (INAP) protocol. Naturally, the service for providing calling name information can also be implemented in other intelligent network schemes.

The advantage afforded by this concept is that the implementation of the calling name presentation service becomes simpler, as it makes use of the established rules and conventions of the intelligent network scheme, such that specific protocol conversions or the like are not necessary. A further advantage is the increased controllability, as the intelligent network scheme will provide the network operator with better and more sophisticated possibilities of implementing the calling name presentation service. Furthermore, the concept of the invention increases flexibility, as the provision of a calling name presentation service within the context of a intelligent network scheme provides the possibility of sharing calling name information among a plurality of services implemented by the intelligent network scheme.

As stated above, the object is solved by a method of controlling a service control entity for a telephone network. Said network comprises a call switching system for performing call switching control and a service implementation system that is arranged in accordance with an intelligent network scheme designed for providing a plurality of different services to calls switched in said call switching system using a common set of rules for service invocation and execution. Said service control entity belongs to said service implementation system. At least one routine for sending one or more types of calling name instruction messages is provided in accordance with said set of rules to said call switching system. Each type of calling name instruction message comprises an instruction relating to the inclusion of calling name presentation information in a call being switched by said call switching system.

According to an embodiment, the method comprises a routine for sending a first type calling name instruction message that comprises said calling name presentation information for inclusion in said call and presentation on a terminal of a called party.

According to a further embodiment, said calling name presentation information is text information indicating a name in text format.

According to a further embodiment, the method comprises receiving a first calling name presentation information associated with said call from one or more of an internal database, an external database and said call switching system.

According to a further embodiment, the method comprises performing a database query for receiving said first calling name presentation information.

According to a further embodiment, the method comprises using said first calling name presentation information as said calling name presentation information.

According to a further embodiment, the method comprises conducting a replacement procedure for replacing said first calling name presentation information by a second calling name presentation information and using said second calling name presentation information as said calling name presentation information.

According to a further embodiment, the method comprises receiving calling party identification information and deriving said calling name presentation information from said calling party identification information.

According to a further embodiment, the method comprises a routine for sending a second type calling name instruction message comprising an instruction to suppress including any calling name presentation information in said call.

According to a further embodiment, said control method is arranged for providing a plurality of different services and each of said different services comprises the sending of at least one type of calling name instruction message.

According to a further embodiment, the method comprises a routine for sending a data notification comprising said calling name presentation information to a user of said telephone network.

According to a further embodiment, the method comprises a routine for obtaining calling name subscription information associated with one or both of a calling party and a called party of said call.

According to a further embodiment, the method comprises a routine for sending a third type of calling name instruction message to said call switching system, said third type calling name instruction message instructing said call switching system to forward said call, and said third type calling name instruction message comprising a forwarding calling name presentation information as said calling name presentation information and instructing said call switching system to include said forwarding calling name presentation information in said call being forwarded.

According to a further embodiment, the method comprises a routine for sending a fourth type calling name instruction message to said call switching system, said fourth type calling name instruction message instructing said call switching system to initiate a call set-up, and said fourth type calling name instruction message comprising a service calling name presentation information as said calling name presentation information and instructing said call switching system to include said service calling name presentation information in said call set-up.

According to a further embodiment, said service implementation system employs one or both of the INAP protocol and the CAMEL AP protocol, and said service control entity is arranged for implementing a service control function.

The present invention will now be described by looking at detailed embodiments, which are not intended to be limiting, but which help explain the invention, which embodiments make reference to the Figures where:
- Fig. 1: describes a basic block diagram of an embodiment of the present invention;
- Fig. 2: shows a block diagram of a further embodiment of the invention in the context of a mobile telephone system;
- Fig. 3: shows a flowchart of a method embodiment of the present invention;
- Fig. 4: shows a message exchange between a number of network entities in a mobile telephone system, in accordance with an embodiment of the present invention;
- Fig. 5: shows an example of an information element for transporting calling name information; and
- Fig. 6: shows a block diagram of an embodiment of a service control entity.

### [Description of detailed embodiments]

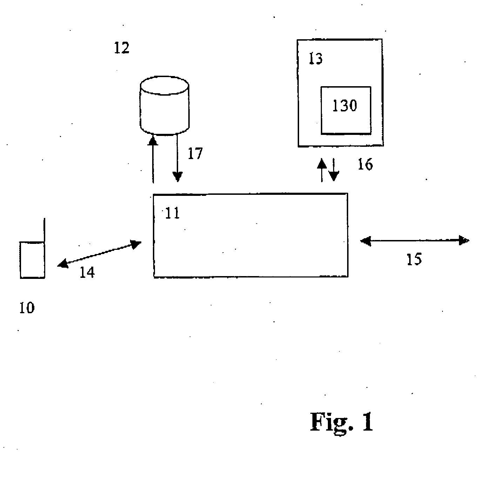

Figure 1 shows a basic block diagram of entities of a telephone network in the context of which the present invention can be implemented. Reference numeral 10 represents a mobile telephone, reference numeral 11 represents a call switching system for performing call switching control, and arrows 14 and 15 represent a call communication for the mobile telephone 10 being handled by the call switching system 11. Reference numeral 12 represents a data base containing subscriber data, which the call switching system 11 may query, in order to obtain data and parameters to be used for performing the call switching operation. Arrows 17 represent communication, e.g. in the form of signalling between the call switching system 11 and the data base 12. Reference numeral 13 represents a service implementation system arranged in accordance with an intelligent network scheme designed for providing a plurality of different services to calls switched in the call switching system 11 using a common set of rules of conventions for service invocation and execution. For example, the intelligent network scheme may provide for a set of triggers contained in calls being handled by the call switching system 11, where the triggers lead to the sending of a service invocation message to the service implementation system 13, which then analyses the triggers and possible further information in the service invocation message, in order to then output an appropriate instruction in accordance with the triggered service to the call switching system. For example, the service implementation system can be provided in accordance with the INAP and/or CAMEL intelligent network scheme.

It is noted that the example of Figure 1 shows a mobile terminal 10, but the present invention can be applied to any telephone system that employs a call switching system and a service implementation system that operates in accordance with an intelligent network scheme. As such, the invention can also be applied to line-based telephone systems. It is furthermore noted that an entity within the meaning of the present specification and claims is an arrangement of one or more units in order to provide a desired functionality. As such, an entity can be a physical node of a network, or can also be provided by a functionality distributed over a plurality of nodes. Moreover, separate entities can be provided within a single physical unit, such as a single network node.

In accordance with the embodiment in Figure 1, a service control entity 130 is provided in system 13, which comprises a service logic that is arranged for sending one or more types of calling name instruction messages provided in accordance with the set of rules and conventions of the intelligent network scheme to the call switching system 11. Each type of calling name instructions message comprises an instruction to the call switching system 11, where the instruction relates to the inclusion of calling name presentation information in a call being switched by the call switching system 11.

It is noted that the service logic within the service control entity 130 can be provided by hardware, software or any suitable combination of hardware and software. For example, the control logic can be embodied by a programmable processor into which is loaded an appropriate computer program for executing a procedure or procedures that provide the described functionality. In this way, it can be seen that the present invention can be embodied as a service control entity having a service logic arranged to provide the functionality, or in the form of a method for controlling such a service control entity comprising procedures for providing the functionality.

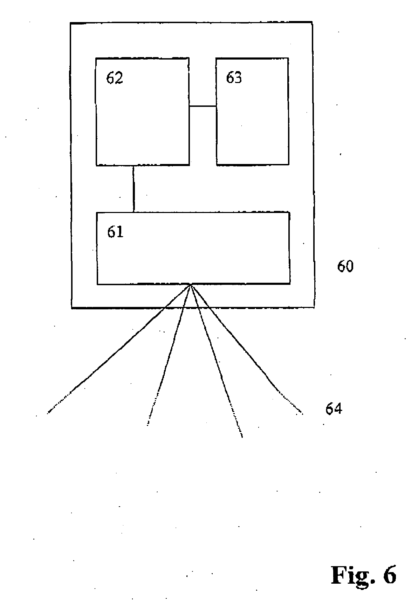

Fig. 6 shows an example of a service control entity. Reference numeral 60 indicates a network node that implements a service control entity in accordance with the present invention. The node 60 comprises a communication part 61 for exchanging data with other entities via connections 64. Furthermore, a processing part 62 and a memory part 63 are provided. The node 60 and the parts 61-63 may have any suitable structure and can e.g. be provided as is known from conventional communication network node. The service logic of the present invention can then be provided in the form of programming for the processing part, which preferably comprises one or more programmable processors.

The types of calling name instruction messages can be chosen in different ways, depending on the service being provided. For example, if the service logic is arranged to provide a plain calling name presentation service, then the service logic may be arranged to send a first type of calling name instruction message that comprises a calling name presentation information indicating a name of a calling party, and an instruction to include the calling name presentation information comprised in the message in a call involving the calling party, for presentation on a terminal of a called party. The instruction may be explicit or implicit. An implicit instruction can e.g. be provided by a rule according to which if calling name presentation information is present in a particular field, then that information is to be presented. An explicit instruction can e.g. be provided by a message format that comprises two parts, a calling name presentation information part (e.g. a first field) and an instruction part (e.g. a second, different field) that contains an instruction related to the information in the calling name presentation information part.

The calling name presentation information is an information that explicitly indicates a name of a calling party (as opposed to an implicit information, such as a telephone number). It can be in any suitable format, e.g. a picture format for presenting a logo or the like, but it is preferably text information that indicates a name in text format.

As shall be explained in more detail further on, the service logic may obtain calling name presentation information in a variety of ways. Namely, calling name presentation information may be received from an internal database of said service control entity, and/or from an external database (e.g. provided in an entity of the same telephone network or in an entity of a different network), and/or from the call switching system. In the latter case, calling name presentation information may e.g. be contained in a service invocation message sent to said service implementation system. Such calling name presentation information could e.g. be have been added on the originating network side of the call being switched. If calling name presentation information is to be obtained from a database, then the service logic is preferably arranged for performing an appropriate database query.

The obtained calling name presentation information may be the one that the service logic then instructs the switching system to include in the call being switched. However, the service logic may also be arranged in such a way that it can conduct a replacement procedure for replacing a first calling name presentation information received from a database or the call switching system by a second calling name presentation information, and using the second calling name presentation information in the instruction message to the call switching system. Examples of this will be described in more detail further on.

The instruction in the instruction message can be provided in accordance with the established rules and conventions with intelligent network scheme, such that formulating the instruction in the service control entity and executing the instruction in the call switching system can be performed in a well-established manner, such that there are no problems or difficulties in this respect. This is a considerable advantage over the prior art.

As a part of the above mentioned plain calling name presentation service or one or more further services, the service logic may also be arranged to send a second type of calling name instruction message that does not contain or indicate any calling name presentation information, but only contains an instruction, e.g. an instruction to suppress including any calling name presentation information in a call. In this case the instruction relating to the inclusion of calling name presentation information in a call indicates that no name information should be included.

As already mentioned previously, the service logic may be arranged for receiving calling name presentation information from the call switching system. This can be in any suitable or desirable form, e.g. in a dedicated signalling message (as shown by communications 16 in Figure 1, which can be signalling) with which the call switching system informs the service implementation system of a calling name presentation information contained in a call to be switched. For example, this calling name presentation information may have been contained in call signalling data arriving at the call switching system 11 in a call that is to be terminated at telephone 10. Calling name presentation information may also be communicated in a name carrying service invocation message (see e.g. arrows 16 in Figure 1), provided in accordance with the rules and conventions of the intelligent network scheme, where the name carrying service invocation message comprises a calling name presentation information. The service logic in service control entity 13 is in any case preferably arranged to be able to process the calling name presentation information received from the call switching system.

The processing can e.g. consist in making a determination whether the calling name presentation information in the service invocation message is to indeed be presented to the telephone 10 or not. This can e.g. be done in dependence on service triggering information, or on information relating to one or both of the calling party and the called party. As an example of the latter, the service logic is preferably arranged in such a way that it can obtain subscription information associated with the calling party of the call being switched, and/or subscription information associated with the called party of the call being switched. For this purpose, the service implementation system 13 shown in Fig. 1 is preferably arranged to be able to communicate with the subscriber database 12 and further subscriber databases in other networks. For example, the subscription information can indicate that the called party subscribes to the calling name presentation service, in which case the service logic instructs the call switching system to include the calling name presentation information in the call. On the other hand, if the subscription information indicates that the called party does not subscribe, the service logic may be arranged to then suppress sending an instruction, or to send an instruction that no calling name presentation information is to be included.

Equally, if the subscription information indicates that the calling party has chosen that his identity not be divulged, the service logic may be arranged to then suppress sending an instruction, or to send an instruction that no calling name presentation information is to be included in the call. On the other hand, if the calling party subscription information contains no such restriction, the service logic may be arranged to instruct the call switching system to include the calling name presentation information in the call.

As already mentioned, the processing of the service logic of the service control entity includes a procedure or capability to replace a calling name presentation information, e.g. it can respond to a name carrying service invocation message or other name carrying message by sending to the call switching system a calling name instruction message that comprises a different calling name presentation information than the calling name presentation information contained in the service invocation message, together with an instruction to the call switching system 11 to include this different calling text information in a call. It is noted that in the present specification and Claims, an "instruction" can be implicit or explicit.

In accordance with the replacement feature, it is possible for the service control entity to take complete control of which calling name presentation information is to be provided to a called party. This in other words means that the network operator who controls the service control entity can take full control of the calling name presentation service. As an example, the service logic can be arranged in such a way that all calls coming from a particular group of calling parties, such as all calls coming from a specific company (like an insurance company) can have the individual calling name presentation information added by a control function on the initiating side of the call removed, and replaced by some other desired calling name presentation information, i.e. the name of the company from which the calls are coming. As another example, in the case of a Virtual Private Network (VPN) service controlled by the service control entity, the service logic can be arranged so that if the VPN call is addressed within the VPN, then the name to be presented can be made more informal, e.g. if the name "Dr. John Doe" is to be presented in the public network, then the name for VPN calls could be changed to "John". With the replacement feature, it is possible to provide a service that was not possible in prior art systems.

In accordance with a further embodiment of the invention, the service logic is preferably arranged for receiving calling party identification information, and for deriving calling name presentation information from the calling party identification information. The service logic of the service control entity may be arranged for receiving a calling party identification information and to apply a calling party identification information to calling party name presentation information translation mechanism for the derivation. An example for such a translation mechanism is a number-to-name mechanism. Accordingly, the service logic of the service control entity may be arranged for receiving a calling number in a service invocation message sent by said call switching system 11, and for performing a number-to-name translation, in order to generate calling name presentation information based on the received calling number. The generated calling name presentation information can then be used in any suitable or desirable way, e.g. it can be included in a calling name instruction message together with an instruction to include this calling name presentation information in a call.

Preferably, the service control entity of the invention comprises a calling name data base (not shown in Fig. 1), where the service logic is arranged for querying the data base on the basis of calling party identification information. Such calling party identification information can be chosen in any suitable or desirable way, e.g. it can be the mentioned calling number of the calling party, such as the Mobile Subscriber-Integrated Service Digital Network (MSISDN) number. However, it can also be other identification information, such as the International Mobile Subscriber Identity (IMSI).

As already mentioned, the service logic of the service control entity is preferably arranged to be able to communicate with another entity, for querying calling name presentation information from the other entity. The other entity can e.g. be a service control entity in a different telephone network. For example, if the call switching system 11 and mobile terminal 10 are at the terminating end of a call, and the service logic of the service control entity is triggered to provide a service that requires calling name presentation information, then it is preferable that the service logic may contact the entity in the home network of the calling subscriber that holds the calling name presentation information for said subscriber. The query to said other entity can be conducted in the same fashion as described previously with respect to the calling name data base arranged in conjunction with the service control entity, namely such a query can be conduced on the basis of any suitable or desirable calling party identification information.

As already mentioned previously, one important advantage of the present invention is the possibility of having a plurality of services provided by the service control entity, which share calling name presentation information. As a consequence, in accordance with a preferred embodiment, the service logic of the service control entity is arranged for providing a plurality of different services that each may process calling name presentation information and comprise the capability of sending one or more types of calling name instruction message.

For example, the service logic may be arranged to implement a service function for sending a data notification containing calling name presentation information to a user of the telephone network. Such a data notification can e.g. be a message in accordance with a Short Message Service (SMS) or Multimedia Message Service (MMS) for notifying a user of a missed call. In other words, if it is not possible to terminate a call for a particular user, then the service control entity can conduct a data notification service, and as a part of the data notification service the calling name presentation information can be provided to the user in an appropriate text or multimedia message. The data notification service could e.g. also comprise the sending of an email to a predetermined user address, again containing the name of the calling party, which greatly improves the quality of the data notification message. Therefore, the sending of a notification to a user may imply the sending of a message to one or more user addresses.

According to a further embodiment, the service control entity may be arranged to implement a service function for sending a third type calling name instruction message that comprises a forwarding instruction to the call switching system 11. The forwarding instruction instructs the call switching system 11 to perform a call forwarding. The message furthermore comprises a forwarding calling name presentation information and instructs the call switching system 11 to include the forwarding call name presentation information in the call being forwarded. In such a way, the call could then comprise the original calling name (i.e. the calling of the originating terminal), the forwarding calling name (i.e. the calling name of the terminating telephone for which a call forwarding service is being applied), or both.

In connection with such a call forwarding service that is capable of sending forwarding instruction messages comprising forwarding calling name presentation information, it is desirable to also implement a translation mechanism, like a number-to-name translation function in order to be able to translate forwarding numbers into forwarding names.

According to a further embodiment of the invention, the service logic of the service control entity is preferably arranged to implement a service function for sending a fourth type calling name instruction message comprising a call initiation instruction to the call switching system 11. In other words, a service is provided according to which the service control entity can itself initiate calls. Examples of such a service are wake-up calls, calendar appointment reminders, advertising calls or notification calls etc. In accordance with the present embodiment, the service logic is arranged such that the fourth type calling name instruction message instructs the call switching system to initiate a call set-up, and the message comprises a service calling name presentation information and instructs the call switching system 11 to include the service calling name presentation information in the call set-up. This is a completely new capability not provided by any known calling name presentation service.

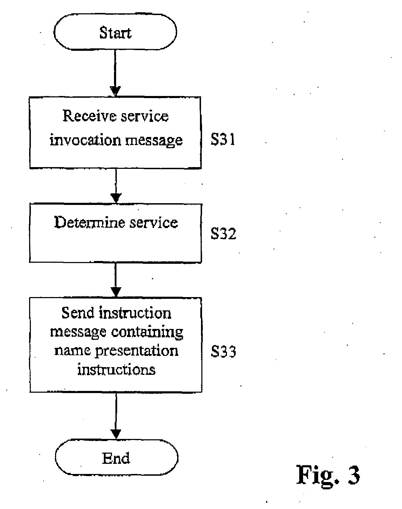

Fig. 3 shows a flowchart of a basic method embodiment of the present invention. The shown method is conducted in the service control entity 130. In a first step S31 a service invocation message is received (see e.g. arrows 16 in Fig. 1). In a second step S32 the specific service that is being triggered is determined. Then, in accordance with the example of Fig. 3, the triggered service comprises a step S33, in which an instruction message is sent to the call switching system 11, which instructions message contains a calling name instruction.

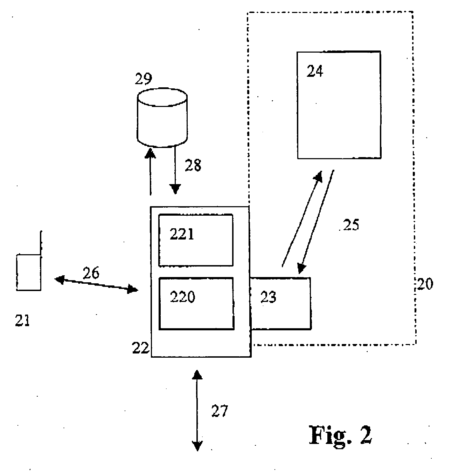

As previously mentioned, the concept of the present application can be applied to any telephone network comprising a call switching system and a separate service implementation system as shown in Fig. 1. According to a preferred example, the present invention is applied to a mobile communication telephone network as shown in Fig. 2. Fig. 2 shows a mobile station 21, a call switching system 22 and a service implementation system 20 comprising parts 23 and 24. The call switching system 22 comprises a Mobile Switching Center (MSC) 220 and a Visitor Location Register (VLR) 221. Fig. 2 furthermore shows a Home Location Register (HLR) 29, which may perform signalling communication 28 with the call switching system 22. Arrows 26 und 27 represent communications being handled by the call switching system 22, e.g. calls.

If the intelligent network scheme used in accordance with the present application is CAMEL, then the service implementation system components 23 and 24 can also be understood as being parts of a CAMEL Service Environment (CSE). Element 23 is then a gsmSSF (GSM Service Switching Function) and element 24, which is an example of the previously described service control entity, is a gsmSCF. (GSM Service Control Function). The concepts, architecture, rules and conventions of CAMEL are well known in the art, e.g. from 3GPP TS 23.078, such that a further description is not necessary here.

The structure shown in Fig. 2 can also be seen as an embodiment of a service implementation system based on INAP, where 23 the represents the INAP Service Switching Function and 24 represents the INAP Service Control Function.

In the following, a number of detailed use cases will be described, from which the usefulness and advantages of the previously described general embodiments will become evident in the context of a 3GPP system using CAMEL. It will be seen how the previously described concepts provide advantages by themselves and in combination with one another.

In a 3GPP system using CAMEL there are two protocols used by the entities for exchanging information and instructions, namely the Mobile Application Part protocol (MAP) and the CAMEL Application Part protocol (CAP). MAP is used among the entities of the call switching system and associated data bases, i.e. between the MSC, VLR and HLR, and between entities of the service implementation system and entities outside the service implementation system, e.g. if the gsmSCF communicates with the HLR in order to obtain subscriber data. CAP is used among the entities of the service implementation system, e.g. for communication between the gsmSCF and gsmSSF. Another entity that can be present in the service implementation system using CAMEL is the gsmSRF (GSM Specialized Resource Function), which also uses the CAP for communication with the gsmSCF. In accordance with the embodiment of the present invention, calling name presentation information, calling name presentation instructions and calling name presentation requests are conveyed using MAP and CAP messages, such that there is no necessity for specific calling name presentation protocols like in the prior art. Clearly, this also obviates the need for specific protocol translation.

In accordance with the aspects described in the previous general embodiments, the gsmSCF as an example of a service control entity may have the capability to control calling name presentation information transferred in the call control protocols used in the telephone switching network (of which the call switching system is a part), with one or more of the following abilities:
- receive calling name presentation information from appropriate sources, such as from the gsmSSF, from the HLR or from a dedicated calling name data base;
- send modified or unchanged calling name presentation information to the gsmSSF;
- indicate to the gsmSSF that calling name presentation information is to be removed from a call control protocol flow in a call being switched, i.e. that such information is to be suppressed; and
- send gsmSSF calling name presentation information (retrieved from an appropriate data base), even if no calling name presentation information is received from the gsmSSF.

The sending of instructions can be done in any suitable or desirable way, e.g. for suppressing the presentation of calling name information in a call, a presentation indicator parameter in the messages can be sent to an appropriate value, such as "suppress presentation". For overwriting a first calling name by a second calling name, the presentation indicator parameter can be set to a different value.

The possible processing or manipulation (e.g. setting up and/or modification) of calling name presentation information by the gsmSCF can e.g. depend on specific end-user service logic.

In the following a number of use cases will be discussed and the utility of one or more of the previously described general concepts will be shown:
1. Mobile originating calls in the MSC/VLR when CAMEL is invoked one or more time, e.g. due to triggers such as O-CSI (originating CAMEL service information), D-CSI (dialled service CAMEL service information), N-CSI (network CAMEL service information).
2. Mobile terminating calls in a gateway MSC (GMSC) when CAMEL is invoked via e.g. a trigger T-CSI (terminating CAMEL service information).
3. Mobile terminating calls in the MSC/VLR when CAMEL is invoked via VT-CSI (VMSC terminating CAMEL subscription information).
4. Mobile forwarding calls in the MSC/VLR or the GMSC when CAMEL is invoked one or more times, due to e.g. to triggers such as O-CSI, D-CSI, N-CSI.
5. New calls initiated by gsmSCF.
6. New party calls initiated by gsmSCF.

Regarding the first use case. When the invocation of CAMEL occurs during an originating call, the CAMEL services in the home network can send calling name presentation information related to the calling subscriber towards the gsmSSF so that they are assigned in the call control protocol, Such as the ISDN user part (ISUP), in the core network. Apart from calling text information, further parameters relating to calling name presentation and instructions can be assigned such as presentation restriction conditions.

The just described capability provides the advantage that no dedicated queries to a name data base are necessary on the originating side of a call, in contrast to the prior art.

The gsmSCF preferably has the capability to handle a number-to-name translation as part of processes running for other end-user services purposes (e.g. originating prepaid service). This is another example of sharing capabilities among several services provided by an intelligent network scheme.

The gsmSCF can use the established dialogue between gsmSCF and gsmSSF as a standard means for transferring calling name presentation information and related parameters and instructions between the two nodes. The information sent from the gsmSCF to the gsmSSF can then be in the call control protocol (e.g. ISUP) and sent to the terminating side of the call in order to be presented to the called party.

It is to be noted that this mechanism works in a simple way and is generally applicable, e.g. also in the case of roaming subscribers and in the case of multi-vendor solutions. Such a functionality cannot be provided by any of the known calling name presentation systems, because network operators cannot control the calling name presentation features appropriately.

An example of a sequence of steps in which the above concepts come into play will now be described with reference to Fig. 2. When the mobile station 21 enters a VLR area, a standard Location Update is performed. The HLR can then provide to the MSC/VLR 220, 221 the CAMEL subscription information (CSI). Then, if the mobile station 21 initiates a call, the MSC handling the call initiation receives the CAMEL subscription information from the VLR. Due to the CAMEL subscription, the MSC/VLR 220, 221 instantiates an internal gsmSSF entity 23. The gsmSSF sends a CAP Initial Detection Point (IDP) to the gsmSCF (see signalling 25). The service logic in the gsmSCF 24 then provides a calling name presentation service and e.g. performs a translation of the calling party number communicated in the CAP IDP into a calling name presentation information. The gsmSCF 24 then passes the call control back to the gsmSSF 23 (and thereby to the MSC/VLR 220, 221) via an appropriate CAP message, such as CONnect (CON) or Continue With Argument (CWA), wherein the information relating to calling name presentation, i.e. the calling name presentation information and the instruction to present, is sent back to the gsmSSF 23. The MSC/VLR 220, 221 then sends an ISUP Initial Address Message (IAM) to the called destination with the calling name presentation information of the calling subscriber included.

Regarding the second use case. For terminating call cases in a gateway MSC, two cases can occur:
a) the originating side of the call has already assigned and sent calling name presentation text information of the calling subscriber over the appropriate call control protocol;
b) the originating side of the call has not already assigned and therefore not included calling name presentation information of the calling Subscriber in the appropriate call control protocol.

If case a) occurs, then, when the gsmSSF, is initiated in the GMSC as part of a terminating call due to CAMEL subscriptions (through appropriate triggers), the received calling name information of the calling subscriber is sent to the gsmSCF. The gsmSCF can then handle such information as desired. For example, for service applications like a "call completion SMS/MMS notification", where in case of a call failure towards the call party the gsmSCF configures a "missed call

SMS/MMS notification" towards such a called user. That notification can then include among other things the calling name presentation information, as this information is available to the gsmSCF.

If case b) occurs, and the service logic in the gsmSCF provides a calling name presentation service in accordance with which calling name information is to be included, different scenarios can be considered:
the calling subscriber belongs to the same public Land Mobile Network (PLMN) as the called subscriber (this can e.g. be determined on the basis of the MSISDN and/or the IMSI);
- the calling subscriber belongs to a different PLMN than the called subscriber;
the calling subscriber belongs to a different type of network (e.g. a Public Switched Telephone Network (PSTN)) than the called subscriber.

In the first scenario, the gsmSCF will preferably already have the calling name presentation information of the calling subscriber. This can e.g. be achieved by keeping a dedicated calling name presentation information data base in conjunction with the gsmSCF, containing such information for all subscribers of the network to which the gsmSCF belong. Also, this can be achieved by keeping the calling name presentation information in the HLR of the given network, and arranging the gsmSCF in such a way that it can appropriately query the HLR of its own network. The calling name presentation information can then be used locally by the gsmSCF itself (e.g. as additional information for the above-mentioned missed call SMS notification), or can be sent to the gsmSSF, in order to be assigned in the call control protocol for the call being terminated by the core network.

In the second scenario the gsmSCF preferably has the new capability to trigger a calling name presentation data base query using appropriate calling party identification information, such as the MSISDN or the IMSI. Such a query can be formulated using dedicated MAP messages. These MAP messages are intended to be exchanged between the gsmSCF (or more generically between the service control entity) entities located in different PLMN, e.g. the gsmSCF in the home network of the call subscriber and the gsmSCF in the home network of the calling subscriber. When the gsmSCF receives the calling name presentation information, it can be used in any of the above described ways, e.g. locally in the gsmSCF for one or more services, or can be sent to the gsmSCF for inclusion in the call to be terminated.

In the third scenario the gsmSCF is preferably arranged in a similar way, i.e. as having the capability to query a calling name presentation data base for subscribers of the different type network using appropriate signalling messages, such as the just indicated MAP messages, to thereby retrieve the calling name representation information and parameters of the calling user.

It is noted that preferably the actions taken by the service logic in the gsmSCF will depend on subscriptions of the called party to calling name presentation services. For this purpose, a MAP message of the type Any Time Subscription Interrogation can be used to obtain information on the calling name presentation subscription(s) of the called party from a HLR inside or outside of the network to which the gsmSCF belongs.

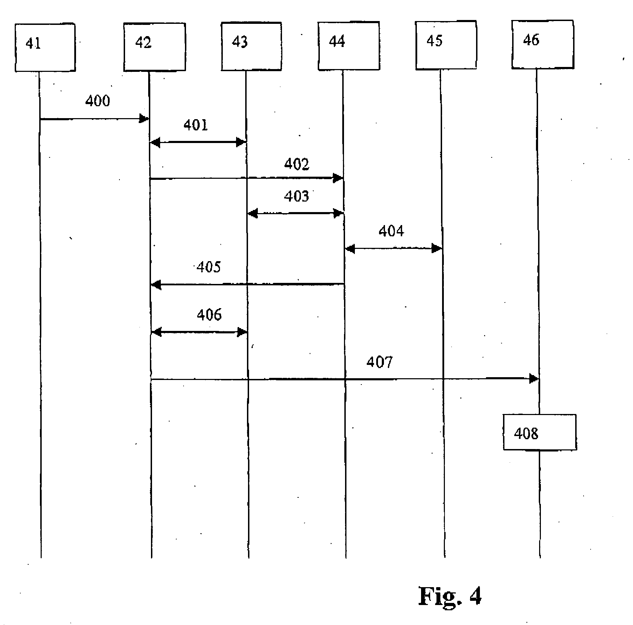

A flow of messages in connection with the just described example will now be described with reference to Fig. 4. The message flow shows details of communications between various entities in the case of the described second scenario (i.e. the calling subscriber belongs to a different PLMN than the called subscriber). In Figure 4, reference numeral 41 relates to the MSC/VLR of the originating network. Reference numeral 42 relates to a node comprising the gateway MSC and the gsmSSF of the network of the called subscriber, which acts as an interrogating network within the CAMEL context. Reference numeral 43 represent the HLR in the home network of the called subscriber, and reference numeral 44 describes the gsmSCF in the home network of the called subscriber. Reference numeral 45 describes the gsmSCF in the home network of the calling subscriber which is assumed to hold the data base containing the appropriate calling name presentation information of the calling subscriber. Reference numeral 46 describes the terminating MSC/VLR.

Reference numeral 400 represents an ISUP IAM message that is received in the GMSC node 42 from the originating MSC/VLR 41. It is assumed that the originating network has not included any CNAP information over the call control protocol. Reference numeral 401 represents a first HLR interrogation via MAP, which is performed by the GMSC 42 to the HLR 43, in order to obtain routing information. The HLR 43 returns the CAMEL subscription data (T-CSI data). Due to the CAMEL subscription an internal gsmSSF entity is instantiated in the GMSC node 42. This gsmSSF entity then sends a CAP IDP message 402 to the gsmSCF 44. In order to receive called party subscriptions to the calling name presentation service, if these exist, the gsmSCF 44 performs an MAP ATSI request 403 towards the HLR 43 of the called subscriber. The returned ATSIack indicates that the called party subscribes to the calling name presentation service. The gsmSCF 44 then performs a MAP query 404 towards the home network of the calling subscriber, and receives calling name presentation text information and possibly related parameters from the gsmSCF 45 of the calling subscriber, see message 404. The CAMEL service logic in the gsmSCF 44 is then assumed in this example to be arranged such that the calling name presentation information is sent to the gsmSSF in node 42 in order to be assigned in the call control protocol in the core network, see message 405, which could e.g. be a CWA or CON message. The gsmSSF 42 then writes the received information into the call control protocol data. The GMSC in node 42 then performs a second MAP HLR interrogation 406. This time an MSRN (Mobile Subscriber Routing Number) is returned, and the call can be addressed towards the terminating MSC/VLR, which is indicated as reference numeral 46 in Fig. 4. Then an ISUP IAM message is sent by the GMSC node 42 to the terminating MSC/VLR 46, see message 407. Such an ISUP message includes the calling name presentation information received from the gsmSCF 44 in message 405. Finally, the terminating MSC/VLR 46 can then present the calling name presentation information to the called party, see reference numeral 408.

Regarding the third use case. Similar to terminating calls in the gateway MSC (GMSC), if a call is received in a terminating MSC/VLR, the following two cases can occur:
a) calling name presentation information of the calling subscriber is received over the relevant call control protocol;
b) calling name presentation information of the calling subscriber is not received over the relevant call control protocol.

If case a) occurs, then this means that the originating MSC/VLR and/or the GMSC, or in general the originating network, have already taken actions to assign calling name presentation information for the calling subscriber over the call control protocol. If case b) occurs, then the terminating MSC/VLR can take the same actions as already described for the GMSC in the above second use case.

Regarding the fourth use case. Call forwarding is a known technique in telephone system. It means that under given conditions (e.g. the desired called party is not available over the dialled number), a service logic such as the gsmSCF can provide a service in which the call is redirected or forwarded to another destination. For example, call forwarding can be such that a mobile subscriber has indicated in his subscription data that if the mobile is not reachable, then the call is to be forwarded to a predetermined fixed line number. Call forwarding can occur at different call switching points in a telephone system, e.g. at a gateway MSC (this is also referred to as early-call forwarding) or at the MSC/VLR handling the link to the destination terminal (also called late-call forwarding). In the case of both early-call forwarding in the GMSC and late-call forwarding in the MSC/VLR controlled by CAMEL services, apart from receiving any calling name presentation information, the gsmSCF may generally have the possibility to assign additional information regarding the calling name service (e.g. a forwarding calling name) using the CAMEL infrastructure when the forwarding leg is going to be created.

The forwarding calling name is an additional information that can be useful at the terminating side of a call, in order to decide which level of information shall be notified to a called party, the calling name of the originating calling party and/or the forwarding calling name, i.e. the name of the called party that is responsible for the forwarding. The gsmSCF preferably has the capability to handle a translation of forwarding number to forwarding name as part of processing running for end-user service purposes, i.e. for other services.

The service implementation system (CAMEL services environment) can use the established dialogue between the gsmSCF and gsmSSF as a standard means for transferring the calling name presentation information between the two nodes. It is noted that the described mechanism is generally applicable and works even in the case of roaming subscribers and regardless of multi-vendor solutions.

Once set up, the forwarding calling name information (together with the original calling name information) can also be notified to the gsmSCF in the event of further invocations of the gsmSCF during the call.

Attention is drawn to the fact that this a completely new capability offered to network operators that presently have no such possibilities of controlling a call forwarding operation.

Regarding the fifth use case. In the event of a service in the gsmSCF that is capable of initiating new calls, the service implementation system (gsmSCF and gsmSSF) is preferably arranged in such a way that it can also set up calling name presentation information for such a call being initiated by the gsmSCF.

The gsmSCF initiated calls are capabilities that can for example be used for wake-up calls, calendar appointment reminders, advertising calls, notification calls, etc. In all such applications, it is useful if the call being initiated may carry calling name presentation information, such that the called party is capable of seeing who (i.e. which service) is calling. The message exchange can e.g. be as follows. In a first step, after the gsmSCF has decided to initiate a call to a particular user, the gsmSCF sends a query message to the HLR of the served subscriber, in order to obtain calling name presentation subscription information. Such a query may e.g. use the Any Time Subscription interrogation MAP message. The gsmSCF then starts a new call. According to the CAMEL IN scheme, the gsmSCF sends to the gsmSSF a sequence of operations necessary for setting up the call. This can e.g. be an ICA (Initiate Call Attempt) for creating the new call leg. Then an RRB is used for enabling of call event reporting (e.g. for an answer). Then CWA (Continue With Argument) is used when the call can proceed towards its destination. The CWA messaging will include the calling name presentation information. Then, the calling name presentation information is received by the gsmSSF at the gateway MSC and mapped into the call control protocol such that the information can be sent to the call destination.

This is again a completely new capability not available to operators of present systems.

It is noted that a new call may be addressed to an MSC/VLR directly (using an MSRN as called party number) rather than to a GMSC (using an MSISDN as called party number). Addressing the new call to an MSC/VLR directly is e.g. recommendable when the call control protocol in the network is not able to transport the calling name presentation information. The direct addressing of calls to a MSC/VLR with an MSRN is a capability available as a part of known CAMEL handling.

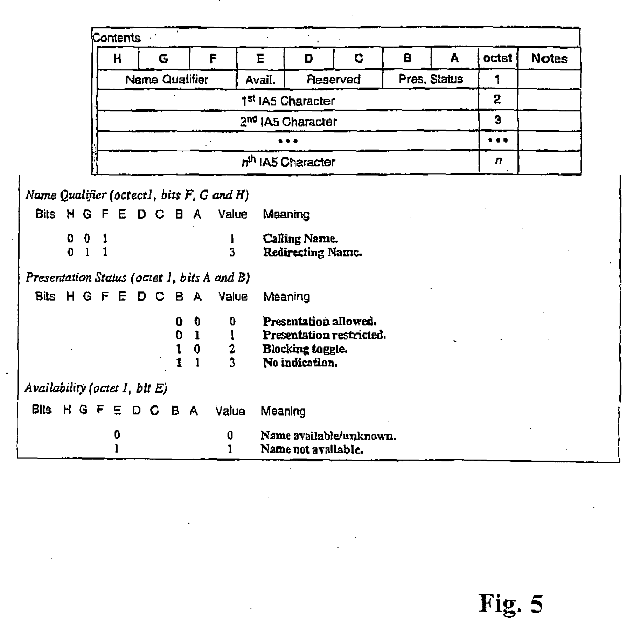

Regarding the sixth use case. The same explanations just given with respect to network-initiated calls also applies to party calls initiated by the gsmSCF, which equally may contain appropriate calling name presentation information. As already mentioned previously, when applying the concepts of the present invention in the context of CAMEL and 3GPP, the entities of the call switching system and the service implementation system may use CAP and MAP messages for exchanging information. The CAP and MAP messages are provided appropriately, in order to communicate the information. For this purpose new information elements may be introduced to the CAMEL application part protocol or the mobile application part protocol. The new information elements appropriately represent the desired information, such as text information, a presentation indicator, etc. An example of such an information element over the CAP protocol is shown in Fig. 5. Naturally, other ways of coding and transporting the information and instructions are possible.

The new information element can be used in a number of different CAP operations and messages, such as e.g. :
- Initial DP, with which the gsmSCF is notified about the calling name presentation information;
- CONnect, with which the gsmSCF can modify/set the calling name presentation information in the call switching system;
- Continue With Argument, with which the gsmSCF can modify/set the calling name presentation information in the call switching system. In this case no call forwarding occurs, but the calling name information for the given call can be modified or set.

Information elements in MAP can be appropriately chosen in the same way. For example, a name parameter exchanged via MAP can have the same form as described in connection with Fig. 5. The appropriate information can then e.g. be transported over the MAP message Any Time Subscription Interrogation.

As can be seen from the above, a number of uses and advantages can be derived from the application of the inventive concepts to a telephone system:
The possibility to allow the gsmSCF (i.e. in general a service control entity) to take over control of CNAP services and modify (if needed and allowed) CNAP information for a given call;
- the gsmSCF can become a proactive network element for the handling of a CNAP service;
- calling name information (text information, parameters and instructions) can be carried via the established CAP protocol, without the need for additional mechanisms;
- the possibility to manipulate a calling name, even if the calling and/or the call subscriber is roaming in a visited PLMN;
- the possibility to manipulate the calling name in case of multi-vendor solutions, as long as they generalize intelligent network scheme is being used, such as CAMEL;
- the possibility to improve the value of end-user services by adding the calling name information, e.g. in the context of a missed call SMS/MMS notification;
- the possibility to assign/modify via the gsmSCF the CNAP information in the GMSC and MSC/VLR when call forwarding is taking place;
- the possibility to assign a CNAP information in case of gsmSCF-inititated calls; and
- the possibility to interface intelligent network based services and CNAP, i.e. to share calling name presentation information with other services implemented by the intelligent network scheme.

## Claims

1. A service control entity for a telephone network, said network comprising a call switching system for performing call switching control and a service implementation system that is arranged in accordance with an intelligent network scheme designed for providing a plurality of different services to calls switched in said call switching system using a common set of rules for service invocation and execution, said service control entity belonging to said service implementation system,
**characterized in that**
said service control entity comprises a service logic that is arranged for sending one or more types of calling name instruction messages provided in accordance with said set of rules to said call switching system, each type of calling name instruction message comprising an instruction relating to the inclusion of calling name presentation information in a call being switched by said call switching system.

2. The service control entity of claim 1, wherein said service logic is arranged for sending a first type calling name instruction message that comprises said calling name presentation information for inclusion in said call and presentation on a terminal of a called party.

3. The service control entity of claim 1 or 2, wherein said calling name presentation information is text information indicating a name in text format.

4. The service control entity of one of claims 1 to 3, wherein said service logic is arranged for receiving a first calling name presentation information associated with said call from one or more of an internal database, an external database and said call switching system.

5. The service control entity of claim 4, wherein said service logic is arranged for performing a database query for receiving said first calling name presentation information.

6. The service control entity of claim 4 or 5, wherein said service logic is arranged for using said first calling name presentation information as said calling name presentation information.

7. The service control entity of claim 4 or 5, wherein said service logic is arranged for conducting a replacement procedure for replacing said first calling name presentation information by a second calling name presentation information and using said second calling name presentation information as said calling name presentation information.

8. The service control entity of one of claims 1 to 7, wherein said service logic is arranged for receiving calling party identification information, and for deriving said calling name presentation information from said calling party identification information.

9. The service control entity of one of claims 1 to 8, wherein said service logic is arranged for sending a second type calling name instruction message comprising an instruction to suppress including any calling name presentation information in said call.

10. The service control entity of one of claims 1 to 9, wherein said service logic is arranged for providing a plurality of different services and each of said different services comprises the sending of at least one type of calling name instruction message.

11. The service control entity of one of claims 1 to 10, wherein said service logic is arranged for sending a data notification comprising said calling name presentation information to a user of said telephone network.

12. The service control entity of one of claims 1 to 11, wherein said service logic is arranged for obtaining calling name subscription information associated with one or both of a calling party and a called party of said call.

13. The service control entity of one of claims 1 to 12, wherein said service logic is arranged for sending a third type of calling name instruction message to said call switching system, said third type calling name instruction message instructing said call switching system to forward said call, and said third type calling name instruction message comprising a forwarding calling name presentation information as said calling name presentation information and instructing said call switching system to include said forwarding calling name presentation information in said call being forwarded.

14. The service control entity of one of claims 1 to 13, wherein said service logic is arranged for sending a fourth type calling name instruction message to said call switching system, said fourth type calling name instruction message instructing said call switching system to initiate a call set-up, and said fourth type calling name instruction message comprising a service calling name presentation information as said calling name presentation information and instructing said call switching system to include said service calling name presentation information in said call set-up.

15. The service control entity of one of claims 1 to 14, wherein said service implementation system employs one or both of the INAP protocol and the CAMEL AP protocol, and said service control entity is arranged for implementing a service control function.

16. A method of controlling a service control entity for a telephone network, said network comprising a call switching system for performing call switching control and a service implementation system that is arranged in accordance with an intelligent network scheme designed for providing a plurality of different services to calls switched in said call switching system using a common set of rules for service invocation and execution, said service control entity belonging to said service implementation system,
**characterized by**
at least one routine for sending one or more types of calling name instruction messages provided in accordance with said set of rules to said call switching system, each type of calling name instruction message comprising an instruction relating to the inclusion of calling name presentation information in a call being switched by said call switching system.

## Patentansprüche

1. Dienststeuerungsinstanz für ein Fernsprechnetz, wobei das Netz ein Rufvermittlungssystem zum Durchführen von Rufvermittlungssteuerung und ein Dienstimplementierungssystem umfasst, das gemäß einem intelligenten Netzschema ausgelegt und zum Bereitstellen einer Mehrzahl von verschiedenen Diensten für Rufe, die in dem Rufvermittlungssystem vermittelt werden, unter Verwendung eines gemeinsamen Satzes von Regeln für Dienstaufruf und Dienstausführung bestimmt ist, wobei die Dienststeuerungsinstanz zum Dienstimplementierungssystem gehört,
**dadurch gekennzeichnet, dass**
die Dienststeuerungsinstanz eine Dienstlogik umfasst, die zum Senden einer oder mehrerer Typen von Rufnamenanweisungsnachrichten ausgelegt ist, die gemäß dem Satz von Regeln an das Rufvermittlungssystem geliefert werden, wobei jeder Typ von Rufnamenanweisungsnachricht eine Anweisung in Bezug auf die Aufnahme von Rufnamendarstellungsinformationen in einen Ruf umfasst, der durch das Rufvermittlungssystem vermittelt wird.

2. Dienststeuerungsinstanz nach Anspruch 1, wobei die Dienstlogik zum Senden einer Rufnamenanweisungsnachricht eines ersten Typs ausgelegt ist, welche die Rufnamendarstellungsinformationen zur Aufnahme in den Ruf und Darstellung auf einem Endgerät eines angerufenen Teilnehmers umfasst.

3. Dienststeuerungsinstanz nach Anspruch 1 oder 2, wobei es sich bei den Rufnamendarstellungsinformationen um Textinformationen handelt, die einen Namen im Textformat angeben.

4. Dienststeuerungsinstanz nach einem der Ansprüche 1 bis 3, wobei die Dienstlogik zum Empfangen von ersten Rufnamendarstellungsinformationen, die mit dem Ruf assoziiert sind, von einem oder mehreren einer internen Datenbank, einer externen Datenbank und dem Rufvermittlungssystem ausgelegt ist.

5. Dienststeuerungsinstanz nach Anspruch 4, wobei die Dienstlogik zum Durchführen einer Datenbankabfrage zum Empfangen der ersten Rufnamendarstellungsinformationen ausgelegt ist.

6. Dienststeuerungsinstanz nach Anspruch 4 oder 5, wobei die Dienstlogik zum Verwenden der ersten Rufnamendarstellungsinformationen als die Rufnamendarstellungsinformationen ausgelegt ist.

7. Dienststeuerungsinstanz nach Anspruch 4 oder 5, wobei die Dienstlogik zum Durchführen einer Ersetzungsprozedur zum Ersetzen der ersten Rufnamendarstellungsinformationen durch zweite Rufnamendarstellungsinformationen und Verwenden der zweiten Rufnamendarstellungsinformationen als die Rufnamendarstellungsinformationen ausgelegt ist.

8. Dienststeuerungsinstanz nach einem der Ansprüche 1 bis 7, wobei die Dienstlogik zum Empfangen von Identifikationsinformationen des rufenden Teilnehmers und zum Ableiten der Rufnamendarstellungsinformationen von den Identifikationsinformationen des Anrufers ausgelegt ist.

9. Dienststeuerungsinstanz nach einem der Ansprüche 1 bis 8, wobei die Dienstlogik zum Senden einer Rufnamenanweisungsnachricht eines zweiten Typs ausgelegt ist, die eine Anweisung zum Unterdrücken des Aufnehmens von Rufnamendarstellungsinformationen in den Ruf umfasst.

10. Dienststeuerungsinstanz nach einem der Ansprüche 1 bis 9, wobei die Dienstlogik zum Bereitstellen einer Mehrzahl von verschiedenen Diensten ausgelegt ist, und jeder der verschiedenen Dienste das Senden wenigstens eines Typs von Rufnamenanweisungsnachricht umfasst.

11. Dienststeuerungsinstanz nach einem der Ansprüche 1 bis 10, wobei die Dienstlogik zum Senden einer Datenbekanntgabe, welche die Rufnamendarstellungsinformationen umfasst, an einen Teilnehmer des Fernsprechnetzes ausgelegt ist.

12. Dienststeuerungsinstanz nach einem der Ansprüche 1 bis 11, wobei die Dienstlogik zum Erhalten von Rufnamenteilnehmerinformationen ausgelegt ist, die mit einem oder beiden von einem rufenden Teilnehmer und einem angerufenen Teilnehmer des Rufs assoziiert sind.

13. Dienststeuerungsinstanz nach einem der Ansprüche 1 bis 12, wobei die Dienstlogik zum Senden eines dritten Typs von Rufnamenanweisungsnachricht an das Rufvermittlungssystem ausgelegt ist, wobei die Rufnamenanweisungsnachricht des dritten Typs das Rufvermittlungssystem anweist, den Ruf weiterzuleiten, und die Rufnamenanweisungsnachricht des dritten Typs Weiterleitungs-Rufnamendarstellungsinformationen als die Rufnamendarstellungsinforationen umfasst und das Rufvermittlungssystem anweist, die Weiterleitungs-Rufnamendarstellungsinformationen in den Ruf aufzunehmen, der weitergeleitet wird.

14. Dienststeuerungsinstanz nach einem der Ansprüche 1 bis 13, wobei die Dienstlogik zum Senden einer Rufnamenanweisungsnachricht eines vierten Typs an das Rufvermittlungssystem ausgelegt ist, wobei die Rufnamenanweisungsnachricht des vierten Typs das Rufvermittlungssystem anweist, einen Rufaufbau einzuleiten, und die Rufnamenanweisungsnachricht Dienst-Rufnamendarstellungsinformationen als die Rufnamendarstellungsinformationen umfasst und das Rufvermittlungssystem anweist, die Dienst-Rufnamendarstellungsinformationen in den Rufaufbau aufzunehmen.

15. Dienststeuerungsinstanz nach einem der Ansprüche 1 bis 14, wobei das Dienstimplementierungssystem eines des INAP-Protokolls und des CAMEL-AP-Protokolls oder beide einsetzt, und die Dienststeuerungsinstanz zum Implementieren einer Dienststeuerungsfunktion ausgelegt ist.

16. Verfahren zur Steuerung einer Dienststeuerungsinstanz für ein Fernsprechnetz, wobei das Netz ein Rufvermittlungssystem zum Durchführen von Rufvermittlungssteuerung und ein Dienstimplementierungssystem umfasst, das gemäß einem intelligenten Netzschema ausgelegt und zum Bereitstellen einer Mehrzahl von verschiedenen Diensten für Rufe, die in dem Rufvermittlungssystem vermittelt werden, unter Verwendung eines gemeinsamen Satzes von Regeln für den Dienstaufruf und die Dienstausführung bestimmt ist, wobei die Dienststeuerungsinstanz zum Dienstimplementierungssystem gehört,
**gekennzeichnet durch**
wenigstens eine Routine zum Senden einer oder mehrerer Typen von Rufnamenanweisungsnachrichten, die gemäß dem Satz von Regeln an das Rufvermittlungssystem geliefert werden, wobei jeder Typ von Rufnamenanweisungsnachricht eine Anweisung in Bezug auf die Aufnahme von Rufnamendarstellungsinformationen in einen Ruf umfasst, der **durch** das Rufvermittlungssystem vermittelt wird.

## Revendications

1. Entité de contrôle de service pour réseau téléphonique, ledit réseau comprenant un système de commutation d'appel pour effectuer un contrôle de commutation d'appel et un système d'implémentation de service qui est agencé conformément à une conception de réseau intelligent conçu pour fournir une pluralité de services différents à des appels commutés dans ledit système de commutation d'appel en utilisant un ensemble commun de règles à des fins d'invocation de service et d'exécution, ladite entité de contrôle de service appartenant audit système d'implémentation de service,
**caractérisée en ce que**
ladite entité de contrôle de service comprend une logique de service qui est agencée afin d'envoyer un ou plusieurs types de messages d'instruction de nom appelant fournis conformément audit ensemble de règles audit système de commutation d'appel, chaque type de message d'instruction de nom appelant comprenant une instruction relative à l'inclusion d'une information de présentation de nom appelant dans un appel étant commuté par ledit système de commutation d'appel.

2. Entité de contrôle de service selon la revendication 1, dans laquelle ladite logique de service est agencée pour envoyer un premier type de message d'instruction de nom appelant qui comprend ladite information de présentation de nom appelant à des fins d'inclusion dans ledit appel et de présentation sur un terminal d'une partie appelée.

3. Entité de contrôle de service selon la revendication 1 ou 1, dans laquelle l'information de présentation de nom appelant est une information textuelle indiquant un nom au format texte.

4. Entité de contrôle de service selon une des revendications 1 à 3, dans laquelle ladite logique de service est agencée pour recevoir une première information de présentation de nom appelant associée avec ledit appel provenant d'un ou plusieurs d'une base de données interne, une base de données externe et ledit système de commutation d'appel.

5. Entité de contrôle de service selon la revendication 4, dans laquelle ladite logique de service est agencée pour effectuer une interrogation de base de données pour recevoir ladite première information de présentation de nom appelant.

6. Entité de contrôle de service selon la revendication 4 ou 5, dans laquelle ladite logique de service est agencée pour utiliser ladite première information de présentation de nom appelant comme ladite information de présentation de nom appelant.

7. Entité de contrôle de service selon la revendication 4 ou 5, dans laquelle ladite logique de service est agencée pour mettre en oeuvre une procédure de remplacement pour remplacer ladite première information de présentation de nom appelant par une seconde information de présentation de nom appelant et utiliser ladite seconde information de présentation de nom appelant comme ladite information de présentation de nom appelant.

8. Entité de contrôle de service selon une des revendications 1 à 7, dans laquelle ladite logique de service est agencée pour recevoir une information d'identification de partie appelante, et pour déduire ladite information de présentation de nom appelant de ladite information d'identification de partie appelante.

9. Entité de contrôle de service selon une des revendications 1 à 8, dans laquelle ladite logique de service est agencée pour envoyer un second type de message d'instruction de nom appelant comprenant une instruction de suppression incluant toute information de présentation de nom appelant dans ledit appel.

10. Entité de contrôle de service selon une des revendications 1 à 9, dans laquelle ladite logique de service est agencée pour fournir une pluralité de services différents et chacun desdits services différents comprend l'envoi d'au moins un type de message d'instruction de nom appelant.

11. Entité de contrôle de service selon une des revendications 1 à 10, dans laquelle ladite logique de service est agencée pour envoyer une notification de données comprenant ladite information de présentation de nom appelant à un utilisateur dudit réseau téléphonique.

12. Entité de contrôle de service selon une des revendications 1 à 11, dans laquelle ladite logique de service est agencée pour obtenir une information d'abonnement de nom appelant associée à une ou aux deux d'une partie appelante et d'une partie appelée dudit appel.

13. Entité de contrôle de service selon une des revendications 1 à 12, dans laquelle ladite logique de service est agencée pour envoyer un troisième type de message d'instruction de nom appelant audit système de commutation d'appel, ledit troisième type de message d'instruction de nom appelant enjoignant audit système de commutation d'appel d'acheminer ledit appel, et ledit troisième type de message d'instruction de nom appelant comprenant l'information de présentation de nom appelant d'acheminement en tant que ladite information de présentation de nom appelant et enjoignant ledit système de commutation d'appel à inclure ladite information de présentation de nom appelant d'acheminement dans ledit appel étant acheminé.

14. Entité de contrôle de service selon une des revendications 1 à 13, dans laquelle ladite logique de service est agencée pour envoyer un quatrième type de message d'instruction de nom appelant audit système de commutation d'appel, ledit quatrième type de message d'instruction de nom appelant enjoignant audit système de commutation d'appel d'amorcer un établissement d'appel, et ledit quatrième type de message d'instruction de nom appelant comprenant une information de présentation de nom appelant de service en tant que ladite information de présentation de nom appelant et enjoignant ledit système de commutation d'appel à inclure ladite information de présentation de nom appelant de service dans ledit établissement d'appel.

15. Entité de contrôle de service selon une des revendications 1 à 14, dans laquelle ledit système d'implémentation de service emploie un ou deux du protocole INAP et du protocole CAMEL AP et ladite entité de contrôle de service est agencée pour implémenter une fonction de contrôle de service.

16. Procédé de contrôle d'une entité de contrôle de service pour réseau téléphonique, ledit réseau comprenant un système de commutation d'appel pour effectuer un contrôle de commutation d'appel et un système d'implémentation de service qui est agencé conformément à une conception de réseau intelligent conçue pour fournir une pluralité de services différents aux appels commutés dans ledit système de commutation d'appel en utilisant un ensemble commun de règles à des fins d'invocation de service et d'exécution, ladite entité de contrôle de service appartenant audit système d'implémentation de service,
**caractérisé par**
au moins une routine pour envoyer un ou plusieurs types de messages d'instruction de nom appelant fournis conformément audit ensemble de règles audit système de commutation d'appel, chaque type de message d'instruction de nom appelant comprenant une instruction relative à l'inclusion d'une information de présentation de nom appelant dans un appel étant commuté par ledit système de commutation d'appel.
